# EUROPEAN PATENT APPLICATION

(11) **EP 4 568 173 A1**
(43) Date of publication of application: **11.06.2025**
(21) Application number: 23864476.9
(22) Date of filing: 14.07.2023
(51) Int. Cl.: H04L 9/32

(54) **DATA PROCESSING METHOD, COMPUTER DEVICE, AND READABLE STORAGE MEDIUM**

(30) Priority: 13.09.2022 CN 202211132379
(71) Applicant: ZTE Corporation, Shenzhen, Guangdong 518057 (CN)
(72) Inventor: GUO, Tian, Shenzhen, Guangdong 518057 (CN)
(74) Representative: Savi, Massimiliano
(86) International application number: PCT/CN2023/107521
(87) International publication number: WO 2024/055740

(57) **Abstract**

The present application provides a data processing method, a computer device, and a readable storage medium. The method comprises: acquiring a service algorithm of an application service, adding a hash operation process for input data into the service algorithm, and performing arithmetic processing on the service algorithm to obtain an algebraic intermediate expression (S110); processing the algebraic intermediate expression according to a STARK conversion rule to obtain a prover and a verifier (S120); sending the prover to a computing power processing device (S130); receiving an operation result sent by the computing power processing device, the operation result comprising proof information and a hash value (S140); verifying the proof information by means of the verifier, and when the proof information passes the verification, sending the hash value to a data source device, such that the data source device verifies the hash value according to hash data, and returns a verification result (S150); and receiving the verification result, and determining a corresponding execution action according to the verification result (S160).

## Description

### CROSS-REFERENCE TO RELATED APPLICATION

This application is filed on the basis of Chinese patent application No. 202211132379.2 filed September 13, 2022, and claims priority to the Chinese patent application, the entire contents of which are incorporated herein by reference.

### TECHNICAL FIELD

The present disclosure relates to the technical field of network security, and more particularly, to a data processing method, a computer device and a readable storage medium.

### BACKGROUND

Cloud platform systems have become widely adopted. However, upon reflecting on the shortcomings of these existing system architectures, as well as a continuous development of upper-layer service models themselves, the traditional centralized processing architectures and the traditional distributed processing architectures can no longer meet demands. As a result, some new improvement requirements for bottom layer cloud platforms and data processing architectures have been proposed. Currently, computility outsourcing application scenarios are very common in many industries, such as users deploying and running their own applications written by themselves on cloud platforms; enterprises installing computing program on users' computers to complete a part of the computing tasks; and the like. In most scenarios, service participants may be roughly divided into three roles: a data user, a data processor, and a data source. The data user "outsources" a specific computation execution to the data processor, thus effectively reducing the costs for deployment, and operation-maintenance required for the data user's own operation. This is one of main benefits of using the computility outsourcing mode. However, this outsourcing practice also brings unexpectedly security risks: when the data processor behaves abnormally, or when the input data is tampered with, computational integrity and data integrity of the application will not be guaranteed.

### SUMMARY

In accordance with the present disclosure, a data processing method, a computer device and a readable storage medium are provided.

Technical solutions of embodiments of the present disclosure are as follows:
In accordance with a first aspect of the present disclosure, a data processing method, applied to a data application device, is provided. The method includes: acquiring a service algorithm for an application service, adding a hash computation process for input data to the service algorithm, and performing an arithmetization processing on the service algorithm, thereby obtaining an algebraic intermediate representation (AIR); processing the algebraic intermediate representation (AIR) according to a predetermined Scalable Transparent ARgument of Knowledge (STARK) transformation rule, thereby obtaining a prover and a verifier; transmitting the prover to a computility processing device; receiving a computational result transmitted by the computility processing device, where the computational result includes proof information and a hash value, and the proof information and the hash value are obtained through the computility processing device computing service data provided by data source device with the prover; verifying the proof information with the verifier; and in response to the proof information passing the verification, transmitting the hash value to the data source device, so that the data source device verifies the hash value according to the hash data obtained by using the hash algorithm, and returns a verification result; and receiving the verification result, and determining a corresponding execution action according to the verification result.

In accordance with a second aspect of the present disclosure, a data processing method, applied to a computility processing device, is provided. The method includes: receiving a prover transmitted by a data application device; acquiring service data from a data source device, computing the service data by the prover, thereby obtaining the computational result including proof information and a hash value; and transmitting the computational result to the data application device, so that the data application device determines a corresponding execution action according to the proof information and the hash value.

In accordance with a third aspect of the present disclosure, a data processing method, applied to a data source device, is provided. The method includes: acquiring a plurality of pieces of first data corresponding to an application service; and performing data preprocessing on respective pieces of the first data, thereby obtaining respective pieces of service data; performing a hash computation on respective pieces of the service data by using a hash algorithm, thereby obtaining respective pieces of hash data; receiving a data acquisition request transmitted by the computility processing device, where the data acquisition request carries a data range and data information; in response to the data range being legal, selecting the service data corresponding to the data information; transmitting the service data to the computility processing device, so that the computility processing device computes on the service data with the prover, thereby obtains proof information and the hash value, and transmits the proof information and the hash value to the data application device; receiving a verification request transmitted by the data application device, where the verification request indicates that the proof information has passed a verification by the verifier deployed on the data application device, and has carried the hash value; and verifying the hash value according to the hash data, thereby obtaining a verification result, and transmitting the verification result to the data application device.

In accordance with a fourth aspect of the present disclosure, a computer device is provided. The computer device includes a memory and a processor. The memory stores computer-readable instructions therein. And upon being executed by one or more processors, the computer readable instructions cause the one or more processors to perform the method according to any one of the above first, second and third aspects.

In accordance with a fifth aspect of the present disclosure, a computer readable storage medium is further provided. The storage medium is readable and writable by a processor. The storage medium stores computer-readable instructions therein. And upon being executed by one or more processors, the computer readable instructions cause the one or more processors to perform the method according to any one of the above first, second and third aspects.

### BRIEF DESCRIPTION OF DRAWINGS

Fig. 1 is a schematic structural diagram illustrating a data processing system provided according to an embodiment of the present disclosure;
Fig. 2 is a schematic structural diagram illustrating a data processing system provided according to another embodiment of the present disclosure;
Fig. 3 is a schematic diagram illustrating a data processing method provided according to an embodiment of the present disclosure;
Fig. 4 is a schematic flowchart illustrating sub-steps of the step of S160 in Fig. 3;
Fig. 5 is a schematic flowchart illustrating a data processing method provided according to another embodiment of the present disclosure;
Fig. 6 is a schematic diagram illustrating a data processing method provided according to another embodiment of the present disclosure;
Fig. 7 is a schematic flowchart illustrating a data processing method provided according to another embodiment of the present disclosure;
Fig. 8 is a schematic diagram illustrating a data processing method provided according to another embodiment of the present disclosure;
Fig. 9 is a schematic flowchart illustrating a data processing method provided according to another embodiment of the present disclosure;
Fig. 10 is a schematic flowchart illustrating sub-steps of the step of S370 in Fig. 8;
Fig. 11 is a schematic flowchart illustrating sub-steps of the step of S310 in Fig. 8;
Fig. 12 is a schematic overall flowchart illustrating result verification of a data processing method provided according to an embodiment of the present disclosure;
Fig. 13 is a schematic overall flowchart illustrating prover deployment of a data processing method provided according to the embodiment of the present disclosure;
Fig. 14 is a schematic data acquisition flowchart illustrating a data processing method provided according to the embodiment of the present disclosure;
Fig. 15 is a schematic hash value verification flowchart illustrating a data processing method provided according to an embodiment of the present disclosure; and
Fig. 16 is a schematic structural diagram illustrating a computer device provided according to an embodiment of the present disclosure.

### DETAILED DESCRIPTION

To clearly outline the purposes, technical solutions and advantages of the present disclosure, the present disclosure is described in further detail hereinafter with reference to the accompanying drawings and the embodiments. It should be understood that the embodiments described herein are merely intended to explain the present disclosure and are not intended to limit the scope of the present disclosure.

It should be noted that although a logical sequence is shown, under certain circumstances, steps shown or described in the flowcharts may be executed in an order different from the logical sequence.in the flowchart. Terms such as "first," "second," "third," "fourth," and "fifth", and the like, in the specification, claims, and accompanying drawings are used to distinguish similar objects, instead of necessarily describing a specific order or sequence.

In related technologies, computility outsourcing can make full use of the existing hardware computing resources, simplifying the complexity of the upper-layer applications, and improving compatibility. However, these related technologies have not addressed solutions about: how can the data user determine that data processors can faithfully perform entrusted algorithms, how to determine that the algorithm process keeps not to be tampered with, how to determine that the intermediate result and the final result of the computation have not tampered with. Because the data user does not have direct contact with the data source, the data user cannot discover whether the input data of the algorithm has been tampered with. Therefore, computational integrity and data integrity cannot be guaranteed in computility outsourcing application scenarios. In response to the above questions, many people may think: If the manager behind the data processor is trustworthy, and if the data processor's all software and hardware suppliers and operation and maintenance executors are trustworthy, the data processor will not destroy the computational integrity or the data integrity. However, in practice, trustworthiness of the data processor cannot be guaranteed, as widely used mature software and hardware that are often found to have various vulnerabilities and backdoors. Therefore, it needs to be solved urgently how to ensure computational integrity and data integrity.

According to an embodiment of the present disclosure, a data processing method, a computer device and a readable storage medium are provided. The data processing method includes: acquiring a service algorithm for an application service, adding a hash computation process for input data into the service, algorithm, and performing an arithmetization processing on the service algorithm, thereby obtaining an algebraic intermediate representation (AIR); processing the algebraic intermediate representation (AIR) according to a predefined Scalable Transparent ARgument of Knowledge (STARK) transformation rule, thereby generating a prover and a verifier, and adding a hash value computational process of the input data into the service algorithm, thereby obtaining a hash value of the input data; incorporating the hash computation process into the protection of STARK, thereby ensuring both integrity of the hash value computation process and integrity of the computational result; transmitting the prover to a computility processing device, thereby facilitating the computility processing device to obtain the computational result by using the prover; receiving the computational result transmitted by the computility processing device, where the computational result includes proof information and a hash value, and the computility processing device performs computation on the service data provided by the data source device, with the prover, thereby obtaining the proof information and the hash value; where receiving the computational result is beneficial for subsequent verification of the proof information and the hash value. verifying the proof information with the verifier, and transmitting the hash value to the data source device in a case that the proof information passes the verification, in order to make the data source device verify the hash value according to the hash data obtained by using the hash algorithm, and return the a verification result; by locally deploying the verifier in the computility processing device to verify the proof information, determining whether the computational process or the computational result has been tampered with when the computility processing device running the prover, thereby ensuring computational integrity; receiving the verification result transmitted from the data source device; determining a corresponding execution action, according to on this verification result; and by obtaining the verification result for the hash value, guaranteeing data integrity. Compared with related technical solutions in which computility outsourcing is unable to guarantee the computational integrity and the data integrity, the embodiments of the present disclosure add a hash computation process of input data of a service algorithm into the service algorithm, and use the STARK technology to carry out the verification processing of the computational process and the result of the service algorithm; and at the same time, by using the hash verification function provided by the data source, guarantee the computational integrity and the data integrity.

Embodiments of the present disclosure will be further described below with reference to the accompanying drawings.

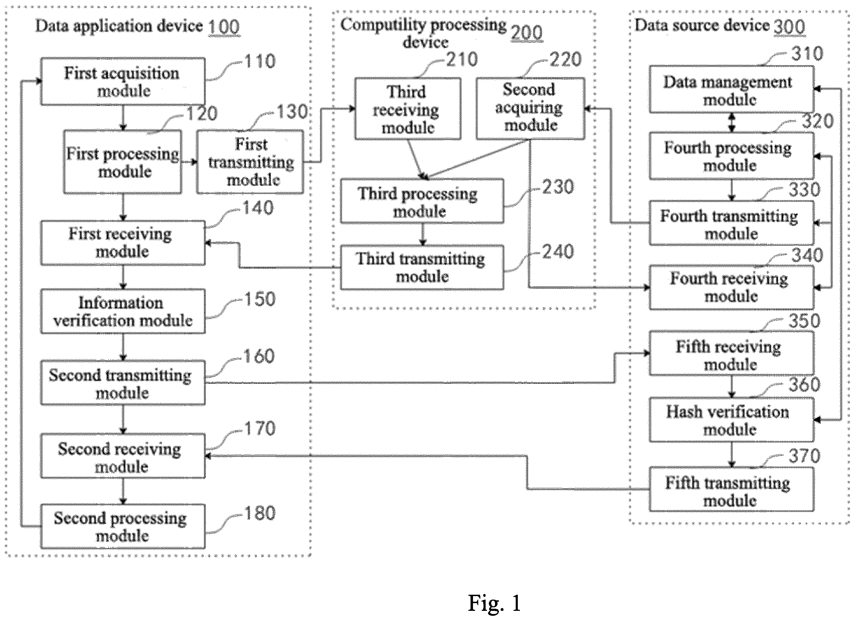

According to embodiments of the present disclosure, a data processing system for implementing the data processing method is further proposed. Referring to Fig. 1, which is a structural schematic diagram illustrating a data processing system provided according to an embodiment of the present disclosure. In an example shown in Fig. 1, data interaction occurs among the data application device 100, the computility processing device 200 and the data source device 300 in the data processing system, thereby ensuring efficiency and integrity of the data processing process.

As shown in Fig. 1, the data application device 100 includes: a first acquisition module 110, configured to acquire a service algorithm for the application service, add a hash computation process for the input data into the service algorithm, and performing an arithmetization processing for the service algorithm, so as to obtain an algebraic intermediate representation (AIR); a first processing module 120, configured to process the algebraic intermediate representation (AIR) according to the predetermined Scalable Transparent ARgument of Knowledge (STARK) transformation rules, so as to obtain a prover and a verifier, and add a hash computation process for the input data into the service algorithm, so as to obtain a hash value of the input data, and incorporate the hash computation process into the protection of STARK, so as to ensure the integrity of the hash computation process and the integrity of the computational result; a first transmitting module 130, configured to transmit the prover to the computility processing device 200 for deploying the prover in the computility processing device 200; a first receiving module 140, configured to receive a computational result transmitted by the computility processing device 200, by outsourcing the computility, to make full use of the hardware resources and improve the efficiency of the execution, where the computational result including the proof information and the hash value, which are obtained after the computility processing device 200 computing the service data provided from the data source device 300 with the prover; an information verification module 150, configured to verify the proof information with the verifier, so as to ensure computational integrity; and a second transmitting module 160, configured to, in a case where the proof information passes the verification, transmit the hash value to the data source device 300, so that the data source device 300 verifies the hash value according to the hash data obtained by using the hash algorithm, and return the verification result, because the computility processing device 200 deploys the verifier locally to verify the proof information, the computility processing device 200 determines whether the computational process and computational result is tampered with when the computility processing device 200 runs the prover, so as to ensure computational integrity; a second receiving module 170, configured to receive the verification result, where data integrity is ensured by obtaining the verification result for the hash value; a second processing module 180, configured to determine a corresponding execution action according to the verification result. Therefore, the embodiments of the present disclosure can ensure computational integrity and data integrity on the basis of high resource utilization and scalability.

In one embodiment, the first acquisition module 110 is connected to the first processing module 120, the first processing module 120 is connected to the first transmitting module 130 and the first receiving module 140 respectively, the first receiving module 140 is connected to the information verification module 150, the information verification module 150 is connected to the second transmitting module 160, the second transmitting module 160 is connected to the second receiving module 170, the second receiving module 170 is connected to a second processing module 180, and the second processing module 180 is connected to a first acquisition module 110. The first acquisition module 110 is a module that acquires a service requirement, defines a service algorithm, adds a hash computation process into the input data in the service algorithm, and provides the service algorithm to the first processing module 120 after performing an arithmetization processing on the service algorithm; the first processing module 120 is a STARK converter modeler that generates a prover and a verifier; the first transmitting module 130 is an interaction module for distributing a algorithmic program; the first receiving module 140 is an interaction module that receives the computational result transmitted from the computility processing device 200; the second transmitting module 160 is an interaction module that transmits a hash value, the second receiving module 170 is an interaction module that receives a verification result from the data source device 300; and the second processing module 180 is an interaction module configured to execute a corresponding action, and transmit the computational result to the first acquisition module 110, being set up as an upper-layer service application.

In one embodiment, Scalable Transparent ARgument of Knowledge (STARK) is a mathematical proof system that converts series of computational steps (including intermediate results and final results) into a probabilistically verifiable proof, by using techniques such as arithmetization, polynomial constraints, and interactive oracle proofs. After the verifier obtains the proof, the verifier can verify whether the proof is true or false with minimal computational cost and extremely high accuracy. If the proof is false, it means that the prover does not really implement all the computational logic (or a certain computational result has been tampered with); and if the proof is true, it means that the prover has indeed strictly executed all the computational logic, and the contents of the input, the intermediate output and the final output are matched with each other. Even if there is a backdoor in the environment where the computility processing device 200 is located, or it is controlled by a malicious attacker; as long as it follows agreed data processing logic and does not tamper with the intermediate result and the final result generated by the computation, the proof and results generated by it will be verified and accepted by the verifier; however, as long as there is any tampering in the computational process and the results, no legal proof may be generated, and it will be detected by the verifier. STARK technology can achieve integrity protection of the computational process in an uncontrolled computational environment. Different STARK libraries and different STARK parameters may be used to implement the above data processing.

As shown in Fig. 1, in the computility processing device 200, the third receiving module 210 is configured to receive a prover transmitted by a data application device 100, which is beneficial to subsequently use the prover for data processing; the second acquisition module 220 is configured to acquire the service data from the data source device 300; and then the third processing module 230 is configured to compute on the service data by the prover, so as to obtain a computational result, which includes proof information and a hash value; where an addition of the computing process for the hash value in the STARK implementation facilitates verify computational integrity and data integrity according to the proof information and the hash value; and the third transmitting module 240 is configured to transmit the computational result to the data application device 100, so that the data application device 100 determines a corresponding execution action according to the proof information and the hash value. The computility processing device 200 can perform computility computation, and feedback the computational result to the data application device 100. Because it is deployed the prover therein, the computility processing device 200 can verify the computational integrity of the processing process of computility processing device 200 and increase information security.

In one embodiment, the third receiving module 210 is connected to the first transmitting module 130; the second acquiring module 220 is connected to the data source device 300; and the third processing module 230 is connected to the third receiving module 210, the second acquiring module 220, and the third transmitting module 240 respectively. The third receiving module 210 is an interaction module configured to receive an algorithmic program transmitted by the data application device 100; the second acquiring module 220 is an interaction module configured to acquire data from the data source; the third processing module 230 is an algorithmic program calling module configured to process the acquired data by using the received algorithmic program; and the third transmitting module 240 is an interaction module that transmits the computational result obtained according to a computation to the data application device 100.

In one embodiment, the computility processing device 200 may be a cloud computing platform, a computility network, or other distributed computing platform that can achieve algorithmic outsourcing, which will not be discussed herein.

As shown in Fig. 1, in the data source device 300, a data management module 310 is configured to acquire a plurality of pieces of first data corresponding to the application service, perform data preprocessing on respective pieces of the first data to obtain respective pieces of service data, and perform hash computation on the respective pieces of service data by using a hash algorithm so as to obtain the respective pieces of hash data, save the acquired data after preprocessing and then perform hash computation so as to form a data set, where data access interface and data structure are externally public, so as to facilitate other entities to access and use the data; and then a fourth receiving module 340 is configured to receive the data acquisition request transmitted by the computility processing device 200, where the data acquisition request carries the data range and data information, which is conducive for subsequently verifying the data range in the data acquisition request; a fourth processing module 320 is configured to, in the case where the data range is legal, select the service data corresponding to the data information corresponding to the data information, and provide data support for the computility processing device 200 by obtaining the service data; a fourth transmitting module 330 is configured to transmit the service data to the computility processing device 200, so that the computility processing device 200 computes on the service data with the prover so as to obtain the proof information and the hash value, and transmits the proof information and the hash value to the data application device 100 so as to ensure the computational integrity; a fifth receiving module 350 is configured to receive a verification request transmitted by the data application device 100, where the verification request indicates that the proof information passes the verification of a verifier deployed on the data application device 100 and carries a hash value, which facilitates a subsequent verification for the hash value in the verification request; a hash verification module 360 is configured to verify the hash value according to the hash data so as to obtain a verification result; and a fifth transmitting module 370 is configured to transmit the verification result to the data application device 100, interacts with the data application device 100 via the data source device 300 so as to ensure data integrity and improve data security. The data source device 300 can determine whether the data has been tampered with, thereby ensuring data integrity.

In one embodiment, the data management module 310 is connected to the fourth processing module 320 and the hash verification module 360 respectively; the fourth processing module 320 is connected to the fourth transmitting module 330 and the fourth receiving module 340 respectively; the fourth transmitting module 330 and the fourth receiving module 340 are both connected to the second acquisition module 220; the fifth receiving module 350 is connected to the second transmitting module 160 and the hash verification module 360 respectively; the hash verification module 360 is connected to the fifth transmitting module 370; and the fifth transmitting module 370 is connected to the second receiving module 170. The fourth receiving module 340 is an interaction module that receives a request from the computility processing device 200; the fourth processing module 320 is a module that acquires service data according to a data request demand; and the fourth transmitting module 330 is an interaction module that provides input data for the computility processing device 200; the fifth receiving module 350 is an interaction module that receives a hash value transmitted by the data application device 100; the fifth transmitting module 370 is an interaction module that transmits the verification result to the data application device 100.

In one embodiment, the data application device 100, the computility processing device 200, and the data source device 300 may be independent from each other, or they may be merged into a combined device called a data application device and data source device 400 which may be independent from the computility processing device 200. When being the data application device and data source device 400, the first acquisition module 110 is denoted as an upper-level service logic module 410; the first transmitting module 130 is denoted as an algorithm management module 440; the first processing module 120 is denoted as a STARK library 430; the information verification module 150 and the second processing module 180 are denoted as a result verification module 420; the first receiving module 140, the second receiving module 170, the second transmitting module 160, the fourth receiving module 340, the fourth transmitting module 330, the fifth receiving module 350, and the fifth transmitting module 370 are denoted as a first interaction module 470; the fourth processing module 320 and the hash verification module 360 are denoted as a data acquisition and processing module 450; the data management module 310 is denoted as the data management module 310; the third processing module 230 is denoted as a computation management module 250; the second acquisition module 220 is denoted as a data acquisition module 260; and the third receiving module 210 and the third transmitting module 240 are denoted as a second interaction module 270.

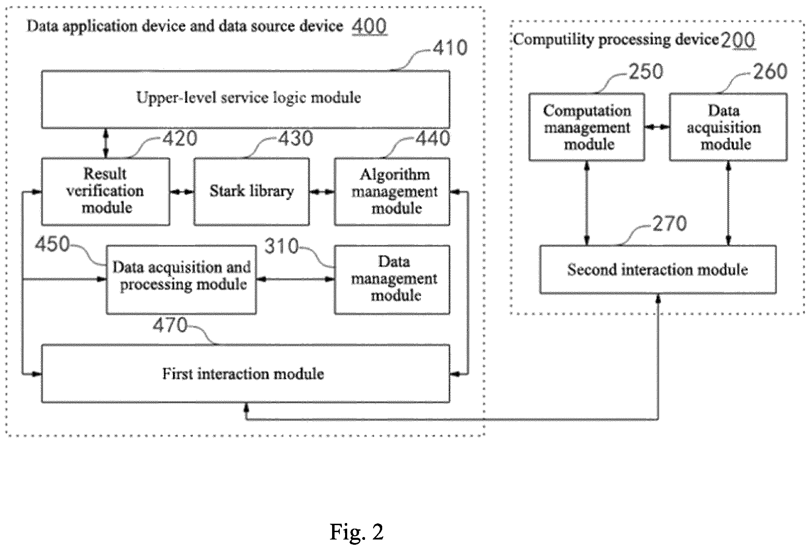

As shown in Fig. 2, in the combined device called the data application device and the data source device 400, the upper-level service logic module 410 is connected to the result verification module 420; the result verification module 420 is connected to the STARK library 430; the STARK library 430 is connected to the algorithm management module 440; the data acquisition and processing module 450 is connected to the data management module 310; the algorithm management module 440 is connected to a first interaction module 470; and the first interaction module 470 is connected to the result verification module 420 and the data acquisition and processing module 450 respectively. In the computility processing device 200, the computation management module 250, the data acquisition module 260, and the second interaction module 270 are connected to each other; and the first interaction module 470 and the second interaction module 270 are connected to each other; and the first interaction module 470 and the second interaction module 270 are modules for realising information interaction between the data application device and data source device 400 and the computility processing device 200. The data application device and data source device 400 is merged and deployed on the same hardware device, and is interacting with the computility processing device 200 may further ensure computational integrity and data integrity on the basis of high resource utilization and scalability.

The devices and the application scenarios described in the embodiments of the present disclosure are for the purpose of more clearly illustrating the technical solutions of the embodiments of the present disclosure, and do not constitute a limitation on the technical solutions provided by the embodiments of the present disclosure. And those skilled in the art may know that, as new application scenarios emerge, the technical solutions provided by the embodiments of the present disclosure are equally applicable to similar technical problems.

It could be understood by those skilled in the art that the data processing system illustrated in Fig. 1 and Fig. 2 does not constitute a limitation of the embodiments of the present disclosure, and may include more or fewer modules than an illustration, or a combination of certain components, or a different arrangement of components.

Based on the above-described data processing system, various embodiments of a data processing method proposed by the present disclosure are described hereinafter.

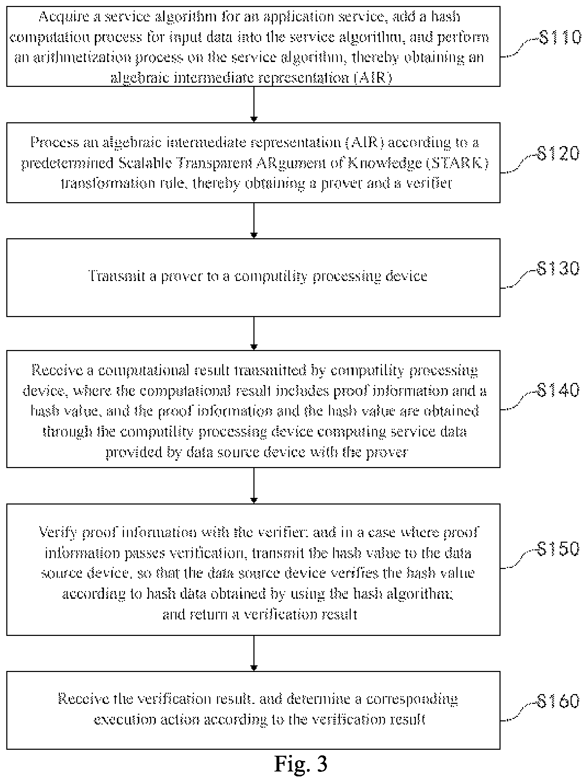

As shown in Fig. 3, which is a schematic flow chart illustrating a data processing method provided according to an embodiment of the present disclosure. The data processing method is applied to the data application device of the above-mentioned data processing system. This data processing method includes but is not limited to a step of S110, a step of S120, a step of S130, a step of S140, a step of S150 and a step of S160 as follows.

At S110, a service algorithm for an application service is acquired, a hash computation process for the input data is added into the service algorithm, and an arithmetization processing is performed on the service algorithm, thereby obtaining an algebraic intermediate representation (AIR).

In one embodiment, the data application device and the data source device have been predetermined the data format, the hash algorithm, and the output format. And different hash algorithms and algorithm parameters may be employed. When the application service requirements are updated or the application service appears for the first time, a service algorithm that meets the application service requirements is designed in accordance with the application service requirements, a hash computation process for the input data is added into the service algorithm, and then the service algorithm into which the hash algorithm computation process is added is performed an arithmetization processing, so as to obtain the algebraic intermediate representation (AIR). It facilitates to generate a prover and a verifier by subsequent using the algebraic intermediate representation (AIR). The hash computation is an irreversible process, the hash algorithm may be understood as a message digest algorithm that compresses the message or data to become smaller and have a fixed format, and is more sensitive to the input data due to its one-way computation with a certain degree of irreversibility.

At S120, the algebraic intermediate representation (AIR) is processed according to a predetermined Scalable Transparent ARgument of Knowledge (STARK) transformation rule, thereby obtaining a prover and a verifier.

In one embodiment, the algebraic intermediate representation (AIR) is processed to convert a series of computational steps into a probabilistically verifiable proof, according to techniques such as polynomial constraints and interactive oracle proofs in the Scalable Transparent ARgument of Knowledge (STARK) library. The mechanism applied by the Scalable Transparent ARgument of Knowledge (STARK) mathematically ensures that any attempt to forge a legal proof will be detected with extremely high probability. Therefore, generating the prover and the verifier by using STARK, ensures computational integrity.

At S130, the prover is transmitted to a computility processing device.

In one embodiment, the prover is generated according to step of S120, and the prover is transmitted to the computility processing device, so that the computility processing device has deployed the prover to return a computational result to the data application device. In addition, a verifier is deployed locally in the computility processing device to facilitate subsequent verification of the returned computational result.

At S140, the computational result transmitted by the computility processing device is received, where the computational result includes proof information and a hash value, and the proof information and the hash value are obtained because the computility processing device computes the service data provided by the data source device with the prover.

In one embodiment, the computational result transmitted by the computility processing device is received, because the step of S130 transmits the prover to the computility processing device. The computational result is obtained because the computility processing device computes the service data by using the prover. The computational result includes the proof information and the hash value. By obtaining the proof information and the hash value, it facilitates subsequent verification of the proof information and the hash value, thereby ensuring computational integrity and data integrity.

At S150, the proof information is verified with the verifier; and in a case where the proof information passes the verification, the hash value is transmitted to the data source device, so that the data source device verifies the hash value according to the hash data obtained by using the hash algorithm; and returning a verification result.

In one embodiment, because a piece of proof information may be obtained by performing computation with a prover, legal verification for the proof information is performed with the verifier, that is, whether the proof information is legal is verified; and in a case where the proof information passes the verification, the hash value is transmitted to the data source device, so that the data source device verifies the hash value according to the hash data obtained by using the hash algorithm; and a verification result is returned. By verifying the proof information and the hash value, computational integrity and data integrity may be guaranteed.

In one embodiment, after the proof information is verified by the verifier, and in a case where the proof information has failed the verification, that is, the proof information has not passed the verification, it indicates that the integrity of the computational process may be damaged, and the computational result cannot be trustworthy. After transmitting the first accountability information to the computility processing device, the operation process is ended. where the first accountability information indicates service algorithm or hash computing process has been tampered with. When the verification fails, the operation process is ended, so as to avoid security problems.

In one embodiment, the legitimacy of the proof information may be verified, or the proof information may be verified. And by verifying the proof information, whether or not the computation process of the prover has been tampered with is determined.

At S160, the verification result is received, and a corresponding execution action is determined according to the verification result.

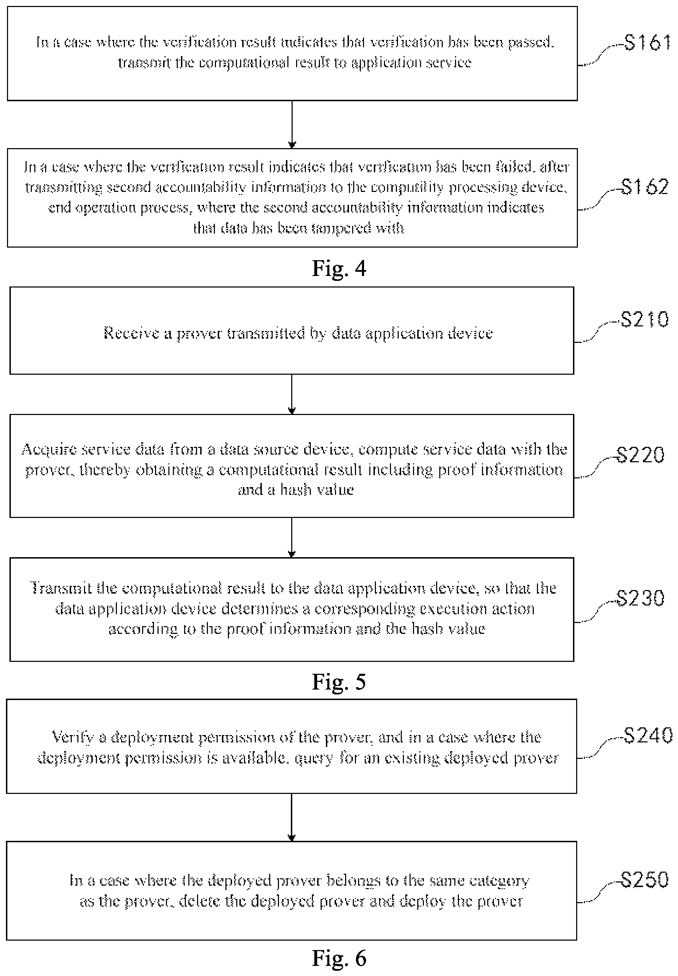

As shown in Fig. 4, the determining the corresponding execution actions according to the verification result, includes, but is not limited to the following steps.

At S161, in a case where the verification result indicates that the verification has been passed, the computational result is transmitted to the application service.

In one embodiment, the input data of the computility processing device may be tampered with or may further be replay attacked (that is, taking a historically received piece of service data to replace the currently received piece of service data as an input to the prover), and in order to avoid a replay attack, the data source device and the data application device determine the hash algorithm specifically as follows: by adding some identification information into the raw data, the identification information and the service data are added by performing a summation calculation. In some examples, a generated timestamp of the data is added before each piece of data, so that even if the data content is exactly identical, the data will be different after the timestamps are added. The input data of the hash function is the timestamps and the service data. Therefore, the hash value obtained according to the above process, are different. The hash value may be verified, so as to ensure data integrity. Firstly, the verification result transmitted by the data source device is received, and in a case where the verification result indicates that the verification has been passed, that is, the hash value verification is passed, it indicates that the input data received by the prover has not been tampered with or historical data has not been used for a replay attack, it is necessary to upload the computational result to the service layer for application. The computational result is correct and trustworthy, so as to ensure data integrity. Because the computational result includes the proof information and a hash value, the proof information and the hash value in the computational result need to be removed. And the removal of the proof information and the hash value may be processed through the second processing module, or it may be processed through the upper service layer to achieve the application of the result text in the computational result. And the proof information and the hash value may be removed by the second processing module, or they may be removed by the upper-layer service layer, so as to achieve applying a result text in the computational result.

At S162, in a case where the verification result indicates that the verification has been failed, after transmitting the second accountability information to the computility processing device, the operation process is ended, where the second accountability information indicates that data has been tampered with.

In one embodiment, after receiving the verification result, in a case where the verification result indicates that the verification has been failed, that is, the verification of the hash value has been failed, it indicates that the input data received by the prover has been tampered with or historical data has replay attacked, the data integrity may be destroyed, and the computational result cannot be trustworthy. After transmitting the second accountability information to the computility processing device, the operation process is ended, where the second accountability information indicates service data was tampered with. When the verification fails, the operation process ends, so as to avoid security problems.

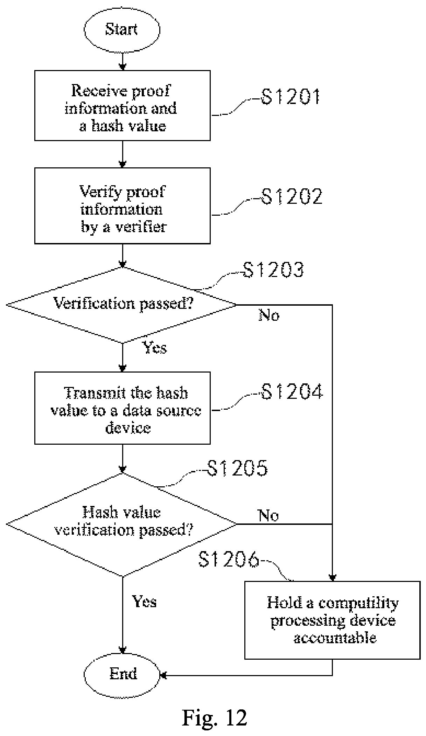

As shown in Fig. 12, the step of S1201 is executed: receiving the proof information and the hash value transmitted by the computility processing device, and then the step of S1202 is executed: verifying the proof information by using a verifier, and then the step of S1203 is executed: determining whether the proof information has passed the verification or not, and in a case where the verification has been passed, the step of S1204 is executed: transmitting the hash value to the data source device, and where the data source device returns the verification result, the step of S1205 is executed: determining whether the hash value verification has passed the verification, and in a case where the hash value has passed the verification, uploading the computational result to the upper-layer application, and in a case where the proof information has not passed the verification or the hash value has not passed the verification, the step of S 1206 is executed: holding the computility processing device accountable, and ending the process.

As shown in Fig. 5, which is a schematic flow chart illustrating a data processing method provided according to another embodiment of the present disclosure. The data processing method is applied to a computility processing device of the above-described data processing system, and the data processing method further includes, but is not limited to, the following steps of S210, S220, and S230.

At S210, a prover transmitted by the data application device is received.

In one embodiment, the prover is transmitted to the computility processing device according to step of S130, the prover transmitted by the data application device is received, and the prover is stored, thereby realizing information interaction between the data application device and the computility processing device.

As shown in Fig. 6, before obtaining the service data from the data source device, the service data is computed with the prover, and a computational result is obtained, the computational result including the proof information and the hash value, the data processing method further includes, but is not limited to, the following steps.

At S240, the deployment permission of the prover is verified, and in the case where the deployment permission is available, an existing deployed prover is queried for.

In one embodiment, according to the deployment permission carried in the prover received in step of S210, the deployment permission is verified, mainly to confirm whether the prover transmitted by the data application device has deployment permission. And in the case where there is deployment permission, the existing deployed prover is queried for. Whether a prover of the same type has been deployed is determined by querying for the deployed prover, thereby determining the subsequent deployment process.

At S250, in a case where the deployed prover belongs to the same category as the prover, the deployed prover is deleted and the prover is deployed.

In one embodiment, in a case where there is a situation where the deployed prover belongs to the same category as the prover, the deployed prover is deleted and cleared and the prover is deployed, so that the deployed prover is updated to more closely match the application service requirements. Deploying the prover means loading and running the received prover.

In one embodiment, deployment permission of the prover is verified, and in a case where there is no deployment permission, the prover is rejected, and the operation process is ended.

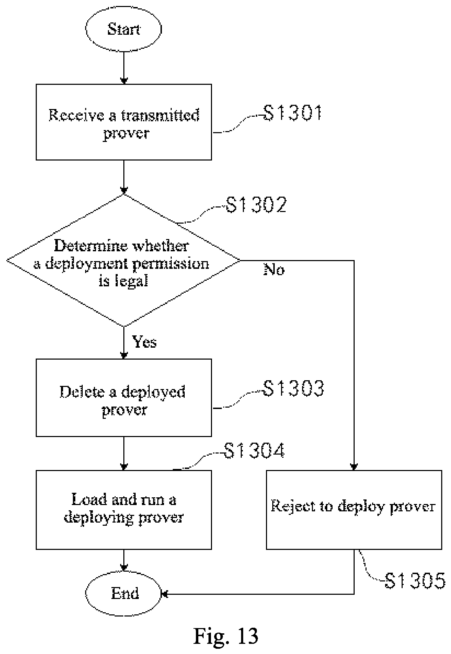

As shown in Fig. 13, the step of S1301 is executed: receiving the prover transmitted by the data application device, and then the step of S1302 is executed: determining whether the deployment permission is legal. In a case where the deployment permission is legal, the step of S1303 is executed: deleting the deployed prover, and then the step of S1304 is executed: loading the received prover and running the received prover. In a case where the deployment permission is illegal, the step of S1305 is executed: rejecting to deploy the prover.

At S220, service data is acquired from a data source device, the service data is computed with the prover, thereby obtaining the computational result. The computational result includes proof information and a hash value.

In one embodiment, because the data source device may update the data, the service data obtained at this time may be updated data or may include updated data, and have no effect on the prover transmitted by the received data application device. The service data is acquired from the data source device, and then the service data is computed by the deployed prover, and the result obtained is a computational result, which includes proof information and a hash value. Computing service data with the prover, facilitates subsequently verifying the proof information and the hash value of the computational result, thereby ensuring computational integrity and data integrity.

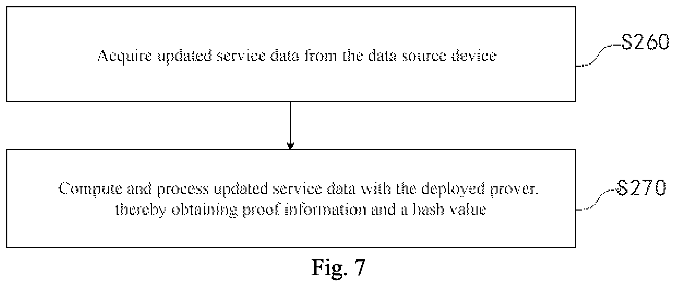

As shown in Fig. 7, in a case where the prover transmitted by the data application device is not received, and new data is detected by the data source device, the data processing method further includes, but is not limited to, the following steps.

At S260, updated service data is acquired from the data source device.

In one embodiment, in a case where the prover is unchanged and the entire system is running stably, the computility processing device continuously interacts with the data source device, and obtains updated service data from the data source device, so as to ensure the stable operation of the computility processing device. Alternatively, in the case where no new data is detected from the data source device, in order to complete the processing tasks transmitted from the data application device, the computility processing device and the data source device are continuously interacting with the data source device, and acquiring service data from the data source device. It facilitates subsequently computing and processing the service data, so as to complete the processing task.

At S270, the updated service data is computed and processed with the deployed prover, thereby obtaining the proof information and the hash value.

In one embodiment, in a case of not receiving the prover transmitted by the data application device, the deployed prover is configured to perform computational processing on the acquired updated service data, so as to obtain the proof information and the hash value. Regardless of whether the prover transmitted by the data application device is received, the interaction with the data source device is possible, and a stable operation of the system could be ensured.

In one embodiment, in a case where the prover is unchanged and the entire system is stable, the data processor will continue to call the prover to perform the computational process. External interaction Actions, such as acquiring data from data sources, and feeding back to the data user and computational result, may be implemented by the prover itself, or may be implemented by the data processor. Even if the prover itself autonomously manages all external interaction actions (acquiring data, transmitting results, and the like), it does not mean higher level of security. The prover runs in an environment fully controlled by the data processor, and thus all computational processes and data interactions of the prover may be observed and interfered with by the data processor arbitrarily.

At S230, the computational result is transmitted to the data application device, so that the data application device determines a corresponding execution action according to the proof information and the hash value.

In some embodiments, the computational results obtained in the step of S220 and the step of S270 are transmitted to the data application device, so as to complete the interaction between the data application device and the computility processing device. The computational result includes proof information and a hash value to verify the information and hash values of the data application device and obtain the verification result. It is a confirmation whether the computility processing device tampered with input data to ensure data integrity.

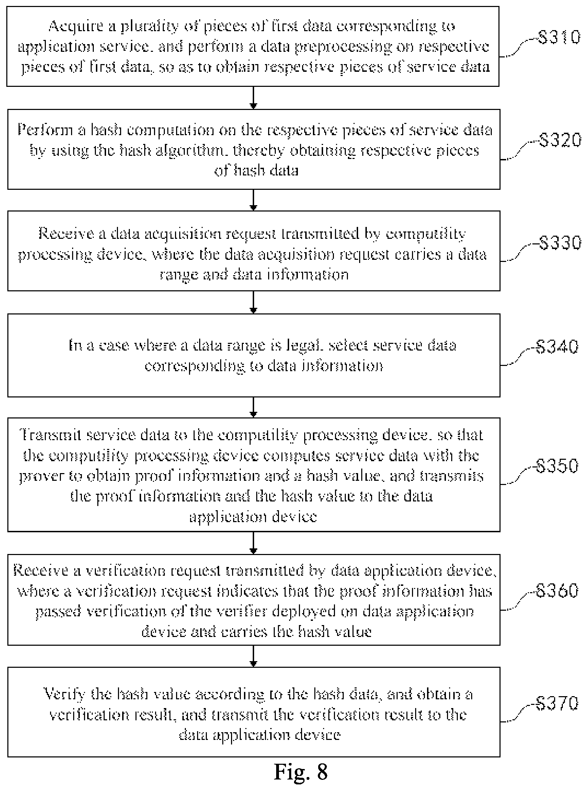

As shown in Fig. 8, which is a schematic flow chart illustrating a data processing method provided according to another embodiment of the present disclosure. The data processing method is applied to the data source device of the above-mentioned data processing system. The data processing method further includes, but is not limited to: steps of S310, S320, S330, S340, S350, S360 and S370.

At S310, a plurality of pieces of first data corresponding to the application service are acquired, and data preprocessing is performed on respective pieces of the first data, so as to obtain respective pieces of service data.

In one embodiment, for different application services, data corresponding to the application service is obtained by acquiring data from real life by a predetermined tool. In some examples, if the image data is acquired, a camera or a mobile phone may be used to take pictures. A plurality of pieces of first data corresponding to the application service may be acquired by data acquisition, and the first data is preprocessed to obtain respective pieces of service data. And the respective pieces of service data provide data support to the computational processing device, so that the computational processing device completes the algorithm operation, where the first data is raw, unprocessed data acquired by the tool.

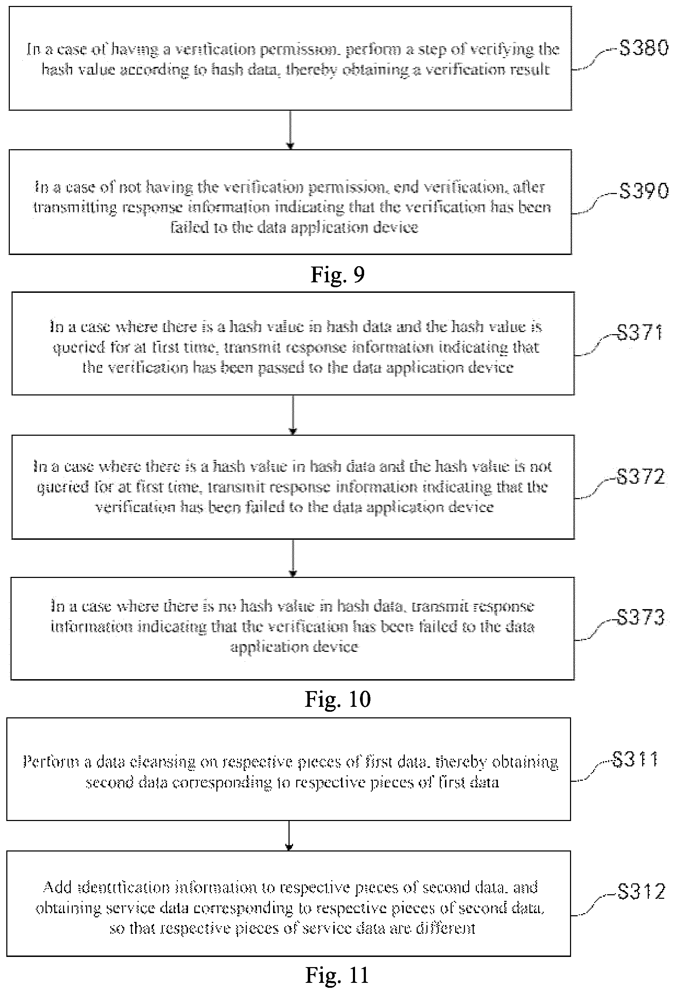

As shown in Fig. 11, the performing data preprocessing on the respective pieces of first data, thereby obtaining respective pieces of service data, includes, but is not limited to the following steps.

At S311, data cleansing is performed on the respective pieces of the first data, thereby obtaining second data corresponding to the respective pieces of the first data.

In some embodiments, the acquired unprecedented first data is processed to remove null values, duplicate values, or illegal values, or the like, so as to obtain second data corresponding to the respective pieces of the first data. By cleaning the first data, some invalid data may be removed and the content occupation may be reduced. The second data is the data after data cleansing the first data.

At S312, identification information is added into the respective pieces of the second data, and service data corresponding to the respective pieces of second data is obtained, so that respective pieces of service data are different.

In some embodiments, according to the step of S311, adding the identification information of the cleansed second data, thereby obtaining respective pieces of service data. By adding the identification information, it may be ensured that the content of each batch of data is different, which in turn makes that the hash values obtained by using the service data are different, so as to verify whether the computility processing device has carried out a replay attack, so as to make the computational result trustworthy, thereby ensuring data integrity. The identification information is metadata, which may be a timestamp or a salt value. The respective pieces of service data provide data support to the computility processing device, so that the computility processing device completes the algorithm operation.

At S320, hash computation is performed on the respective pieces of service data by using the hash algorithm, thereby obtaining the respective pieces of hash data.

In one embodiment, a hash algorithm is used to perform hash computation on the service data, so as to obtain hash data. In some examples, Hash Data = H (timestamp + service data).The hash algorithm is expressed as H (). It may be a different hash algorithm. It may further be an algorithm using different algorithm parameters, by which the hash algorithm performs a summation computation of the identification information and the service data. The hashed data facilitates subsequent verification of the hash value.

In one embodiment, the identification information, the service data, and the hash data form a data set. The data set is stored in a database, and its data access interface and its data structure are disclosed to the public, facilitating other entities to access and use the data. The database may be a Mysql database or a Mongodb database, and or any database capable to store the data.

At S330, data acquisition request transmitted by computility processing device is received, where the data acquisition request carries a data range and data information.

In one embodiment, the computility processing device transmits a data acquisition request to the data source device, and the data acquisition request transmitted by the computility processing device is received, where the data acquisition request carries a data range and data information, and the data range indicates whether or not the computility processing device of the requester has permission to acquire the data or whether or not the data in the requested data range exists in the predetermined data set. By obtaining the data acquisition request, it facilitates subsequently acquiring the corresponding service data according to the data range and the data information.

At S340, in a case where the data range is legal, the service data corresponding to the data information is selected.

In one embodiment, after receiving the data acquisition request according to the step of S330, the carried data range is verified. In a case where the data range is legal, service data corresponding to the data information is selected from the predetermined data set. By determining whether the data range is legal, the data corresponding to the data acquisition request is acquired, and correspondence on the acquired data is achieved.

In one embodiment, the carried data range is verified, and in the case where the data range is illegal, the data acquisition request is rejected, and the operation process is ended.

At S350, the service data is transmitted to the computility processing device, so that the computility processing device computes the service data with the prover to obtain the proof information and the hash value, and transmits the proof information and the hash value to the data application device.

In some embodiments, the service data acquired by the step of S340 is transmitted to the computility processing device of the requester of the data acquisition request, so that the computility processing device computes the service data with the prover to obtain the proof information and a hash value, and transmits the proof information and the hash value to the data application device. Data transmitted to the computility processing device is not the hash data but the service data, because the hash computation process is added when generating the prover, where the prover could compute the service data to obtain the hash value, which facilitates subsequently verifying the hash value according to the hash data, thereby ensuring data integrity.

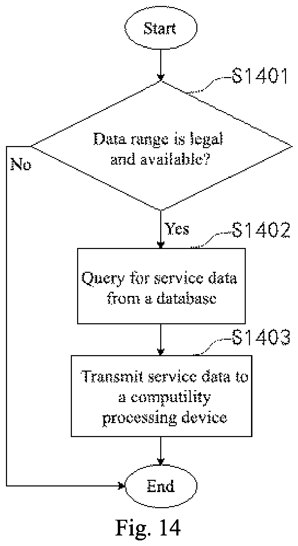

As shown in Fig. 14, in a case of receiving a data acquisition request transmitted by the computility processing device, where the data acquisition request carries a data range and data information, the step of S1401 is executed: determining whether the data range is legal and available; if the data range is legal and available, the step of S1402 is executed: querying for the service data corresponding to the data information from the database, and then the step of S1403 is executed: transmitting service data to the computility processing device; and in a case where the data range is not legal, ending the operation process. By transmitting the service data to the data acquisition request object, it facilitates subsequently verifying the hash value.

At S360, a verification request transmitted by the data application device is received, where the verification request indicates that the proof information has passed the verification of the verifier deployed on the data application device and carries a hash value.

In some embodiments, a verification request transmitted by the data application device is received, so as to facilitate information interaction between the data source device and the data application device. The verification request indicates that the proof information has passed the verification of the verifier deployed on the data application device, and has carried the hash value. It facilitates subsequently verifying the hash value.

In some embodiments, the verification request further carries verification permission. As shown in Fig. 9, before verifying the hash value according to the hash data and obtaining the verification result, the data processing method further includes but is not limited to the following steps.

At S380, in a case of having the verification permission, the step of verifying the hash value is performed according to the hash data, thereby obtaining the verification result.

In one embodiment, whether there is a verification permission is determined, and in a case of having the verification permission, it indicates that the verification request transmitted by the data application device is legal, the step of verifying the hash value according to the hash data of the database is executed, thereby obtaining the verification result. By continuously performing subsequent steps as long as there is a verification permission, it ensures the security of information transmission.

At S390, in a case of not having the verification permission, the verification is ended after transmitting response information indicating that the verification has been failed to the data application device.

In one embodiment, whether there is a verification permission is determined, and in a case where there is no verification permission, it indicates that the data verification request transmitted by the data application device is an illegal access, and no verification operation will not be carried out for the hash value, and the verification is ended, after transmitting the response information indicating that the verification has been failed to the data application device, so as to ensure the security of the information transmission.

At S370, the hash value according to the hash data is verified, a verification result is obtained, and the verification result is transmitted to the data application device.

As shown in Fig. 10, the verifying the hash value according to the hash data, and obtaining the verification result, and transmitting the verification result the data application device, includes, but is not limited to the following steps.

At S371, in a case where there is a hash value in the hash data and the hash value is queried for at the first time, response information indicating that the verification has been passed is transmitted to the data application device.

In one embodiment, in a case where there is a hash value in the hash data, determining whether the hash value is queried for at the first time. In a case where the hash value is queried for in the hash data at the first time and a hash value exists, the verification result is passed, and transmitting the response information indicating that the verification has been passed to the data application device. The verification passed, therefore, the computational result of the computility processing device is trustworthy, which facilitates the data application device to perform the action of transmitting the computational result to the upper-level service application according to the verification result.

At S372, in a case where there is a hash value in hash data, and the hash value is queried for not at the first time, response information indicating that the verification has been failed is transmitted to the data application device.

In one embodiment, in a case where there is a hash value in the hash data, whether the hash value is queried for at the first time is determined. In a case where the hash value is queried for in the hash data not at the first time, and the hash value exists, the verification result is failed, and response information indicating that the verification has been failed is transmitted to the data application device. The verification has been failed, therefore, the input data of the computility processing device may have a replay attack. It facilitates the data application device to perform accountability actions according to the verification result.

At S373, in a case where there is no hash value in the hash data, the response information indicating that the verification has been failed is transmitted to the data application device.

In one embodiment, in a case where there is no hash value in the hash data, it is not necessary to determine whether the hash value is queried for at the first time, that is, the computational result obtained by the computility processing device is not trustworthy, and the verification result is failed, and the response information indicating that the verification has been failed is transmitted to the data application device. The verification is failed, therefore, the input data of the computility processing device may have been tampered with. It facilitates the data application device to hold accountable actions according to the verification result.

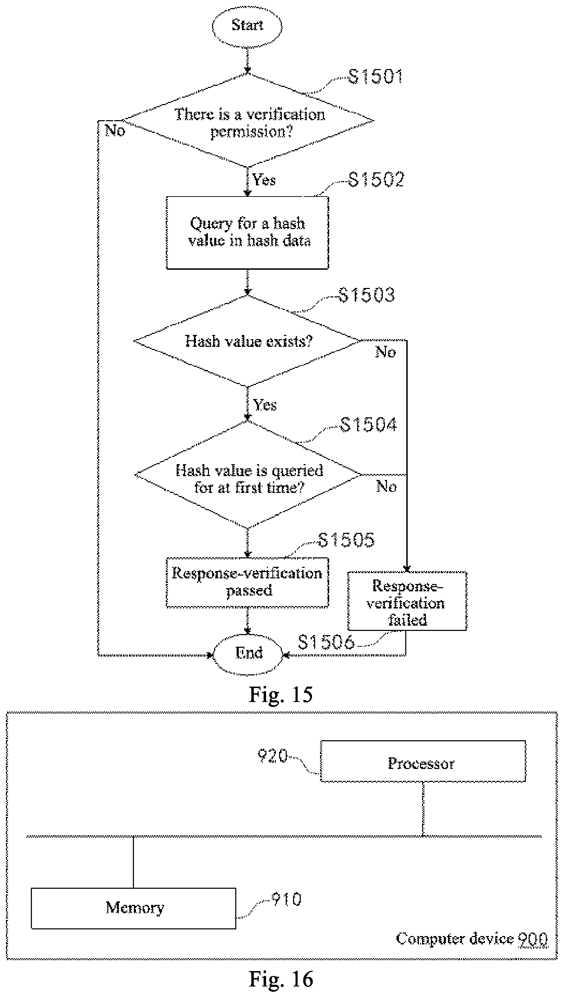

As shown in Fig. 15, after the receiving the verification request transmitted by the data application device, where the verification request indicates that the proof information has passed the verification of the verifier deployed on the data application device, and the verification request has carried a hash value and verification permission, firstly the step of S1501 is executed: determining whether there is verification permission; in a case where there is verification permission, the step of S1502 is executed: querying for the hash value in the hash data; and then the step of S1503 is executed: determining whether the hash value exists; in a case where the hash value exists, the step of S1504 is executed: determining whether the hash value is queried for at the first time; in a case where the hash value is queried for at the first time, the step of S1505 is executed: transmitting the response information indicating that the verification has been passed; either in a case where the hash value exists and the hash value is not queried for at the first time, or in a case where the hash value does not exist, the step of S1506 is executed: transmitting the response information indicating that the verification has been failed. Data integrity is ensured by verifying the hash value.

In one embodiment, the above embodiment of the data processing method is applied in a case where the data application device, the computility processing device, and the data source device are independent. And in a case where the data application device and the data source device are merged, and the computility processing device is independent, the above data processing method is likewise applicable, and details will not be repeated herein, in order to avoid repetition.

Referring to Fig. 16, which illustrates a computer device 900 provided by an embodiment of the present disclosure. The computer device 900 may be a server or a terminal. The internal structure of the computer device 900 includes but is not limited to:
- a memory 910 configured to store a program; and
- a processor 920 configured to execute the program stored in the memory 910. Upon the processor 920 executing the program stored in the memory 910, the processor 920 is configured to execute the above-mentioned data processing method.

The processor 920 and the memory 910 may be connected via a bus or other means.

The memory 910, as a non-transitory computer readable storage medium, may be used to store a non-transitory software program as well as a non-transitory computers executable program, such as a data processing method described by any embodiment of the present disclosure. The processor 920 implements the above data processing method by running non-transient software program as well as instructions stored in the memory 910.

The memory 910 may include a program storage area and a data storage area, where the program storage area may store an operating system and an application program required for at least one function. The storage data area can store and execute the above-mentioned data processing method. In addition, the memory 910 may include a high-speed random access memory, and may further include non-transitory memory, such as at least one magnetic disk storage device, a flash memory device, or other non-transitory solid-state storage device. In some embodiments, the memory 910 may optionally include memories remotely located with respect to the processor 920, and these remotely located memories may be connected to this processor 920 via a network. Examples of the aforementioned network include, but are not limited to, the Internet, an enterprise intranet, a local area network (LAN), a mobile communication network, and combinations thereof.

The non-transitory software program and instructions required to implement the above data processing method are stored in the memory 910. And upon being executed by one or more processors 920, a data processing method provided according to any embodiment of the present disclosure is executed.

An embodiment of the present disclosure further provides a computer-readable storage medium, which stores computer executable instructions, and the computer executes instructions are configured to execute the above data processing method.

In one embodiment, the storage medium storage has computer executable instructions. The computer executable instructions are executed by one or more control processors 920. For example, the instructions are executed by one processor 920 in the above computer device 900, and thus, the one or more processors 920 executes the data processing method provided according to any embodiment of the present disclosure.

A solution according to embodiments of the present disclosure is provided, including: obtaining a service algorithm for the application service, adding a hash computation process on the input data into the service algorithm, and performing an arithmetization processing on the service algorithm, thereby obtaining an algebraic intermediate representation (AIR); processing the algebraic intermediate representation(AIR) according to the pre-determined Scalable Transparent ARgument of Knowledge (STARK) transformation rules, obtaining a prover and a verifier, where a computation process of adding a hash value of the input data into the service algorithm can obtain the hash value of the input data, and incorporating the hash computation process into the protection of STARK can ensure the integrity of the hash value computation process and the computational result; transmitting the prover to the computility processing device, which facilitates the computility processing device to obtain the computational result by using the prover; receiving a computational result transmitted by the computility processing device, where the computational result includes proof information and a hash value, and the proof information and the hash value are obtained through the computility processing device computing service data provided by data source device with the prover; receiving the computational result, which facilitates a subsequent verification of the proof information and the hash value; verifying the proof information with the verifier, and in the case where the proof information has passed the verification, transmitting the hash value to the data source device, so that the data source device verify the hash value according to the hash data by using hash algorithm, and returning the verification result; and because a verifier is locally deployed, verifying the proof information, facilitates to obtain whether the computation process and the computation result of the computility processing device are tampered with when running the prover, and the computation integrity is ensured; receiving the verification result transmitted by the data source, and determining the corresponding execution action according to the verification result; obtaining the verification result of the hash value, which facilitates ensuring the data integrity. Compared with the related technical solutions in which computility outsourcing is unable to ensure computational integrity and data integrity, the embodiments of the present disclosure add a hash computation process of the input data of the service algorithm into the service algorithm, and use the Scalable Transparent ARgument of Knowledge (STARK) technology to carry out verification processing for the computational process and the computational result of the service algorithm. And at the same time, the hash verification function provided by the data source is used to ensure the computational integrity and the data integrity.

The embodiments described above are merely illustrative, where the units illustrated as separated components may or may not be physically separated, that is, they may be located in one place, or they may further be distributed to a plurality of network units. Some or all of these modules may be selected to fulfil the purposes of the solutions of the embodiments according to actual needs.

It could be understood by those skilled in the art that all or some of the steps, systems in the methods disclosed above may be implemented as a software, a firmware, a hardware and suitable combinations thereof. Some or all of the physical components may be implemented as a software executed by a processor, such as a central processor, a digital signal processor, or a microprocessor, or as a hardware, or as an integrated circuit, such as a special-purpose integrated circuit. Such software may be distributed on a computer-readable medium, which may include a computer storage medium (or non-transitory medium) and a communication medium (or transitory medium). As is well known to those skilled in the art, the term computer storage medium includes volatile and non-volatile, removable and non-removable medium implemented in any method or technique for storing information, such as computer-readable instructions, data structures, programme modules or other data. The computer storage medium includes, but is not limited to, RAM, ROM, EEPROM, flash memory or other memory technology, CD-ROM, digital versatile disk (DVD) or other optical disc storage, magnetic cartridges, magnetic tapes, magnetic disk storage or other magnetic storage devices, or any other medium that can be used to store desired information and that can be accessed by a computer. Furthermore, it is well known to those skilled in the art that the communication medium typically includes computer-readable instructions, data structures, program modules, or other data in modulated data signals such as a transmission mechanism, and may include any information delivery medium.

## Claims

1. A data processing method, applied to a data application device, the method comprising:
acquiring a service algorithm for an application service, adding a hash computation process for input data to the service algorithm, and performing an arithmetization processing on the service algorithm, thereby obtaining an Algebraic Intermediate Representation (AIR);
processing the Algebraic Intermediate Representation according to a predetermined Scalable Transparent ARgument of Knowledge (STARK) transformation rule, thereby obtaining a prover and a verifier;
transmitting the prover to a computility processing device;
receiving a computational result transmitted by the computility processing device, wherein the computational result comprises proof information and a hash value, and the proof information and the hash value are obtained through the computility processing device computing service data provided by a data source device with the prover;
verifying the proof information with the verifier; and in response to the proof information passing the verification, transmitting the hash value to the data source device, so that the data source device verifies the hash value according to the hash data obtained by using the hash algorithm, and returns a verification result;
receiving the verification result, and determining a corresponding execution action according to the verification result.

2. The method of claim 1, wherein, after the verifying the proof information with the verifier, the method further comprises: in response to the proof information failing the verification, transmitting first accountable information to the computility processing device, and then ending the operation process, wherein the first accountability information represents that the service algorithm or data hash computation process has been tampered with.

3. The method of claim 1, wherein the determining the corresponding execution action according to the verification result comprises:
in response to the verification result indicating that the verification has been passed, transmitting the computational result to the application service;
in response to the verification result indicating that the verification has been failed, transmitting second accountable information to the computility processing device, and then ending the operation process, wherein the second accountability information indicates the data has been tampered with.

4. A data processing method, applied to a computility processing device, the method comprising:
receiving a prover transmitted by a data application device;
acquiring service data from a data source device, computing the service data by the prover, thereby obtaining the computational result comprising proof information and a hash value; and
transmitting the computational result to the data application device, so that the data application device determines a corresponding execution action according to the proof information and the hash value.

5. The method of claim 4, wherein, before the acquiring the service data from the data source device, computing the service data by the prover, thereby obtaining the computational result comprising the proof information and the hash value, the method further comprises:
verifying a deployment permission of the prover; and in response to there being the deployment permission, querying for an existing deployed prover; and
in response to the prover and the deployed prover belonging to a same category, deleting the deployed prover, and deploying the prover.

6. The method of claim 5, wherein, after the verifying deployment permission of the prover, the method further comprises: in response to there being no deployment permission, rejecting to deploy the prover, and ending the operation process.

7. The method of claim 5, wherein, in response to the prover transmitted by the data application device having not been received, and new data has been detected from the data source device, the method further comprises:
obtaining updated service data from the data source device;
computing and processing the updated service data by using the deployed prover, thereby obtaining the proof information and the hash value.

8. A data processing method, applied to a data source device, the method comprising:
acquiring a plurality of pieces of first data corresponding to an application service; and performing data preprocessing on respective pieces of the first data, thereby obtaining respective pieces of service data;
performing a hash computation on respective pieces of the service data by using a hash algorithm, thereby obtaining respective pieces of hash data;
receiving a data acquisition request transmitted by the computility processing device, wherein the data acquisition request carries a data range and data information;
in response to the data range being legal, selecting the service data corresponding to the data information;
transmitting the service data to the computility processing device, so that the computility processing device computes on the service data with the prover, thereby obtains proof information and the hash value, and transmits the proof information and the hash value to the data application device;
receiving a verification request transmitted by the data application device, wherein the verification request indicates that the proof information has passed a verification by the verifier deployed on the data application device, and has carried the hash value; and
verifying the hash value according to the hash data, thereby obtaining a verification result, and transmitting the verification result to the data application device.

9. The method of claim 8, wherein the verification request further carries verification permission;
before the verifying the hash value according to the hash data, thereby obtaining the verification result, the method further comprises:
in response to there being the verification permission, performing the step of the verifying the hash value according to the hash data; thereby obtaining the verification result; and
in response to there being not the verification permission, transmitting response information indicating that the verification has been failed to the data application device, and then ending the verification.

10. The method of claim 8, wherein the verifying the hash value according to the hash data, thereby obtaining the verification result, and transmitting the verification result to the data application device comprises:
in response to the hash value existing in the hash data, and the hash value is queried for the first time, transmitting response information indicating that the verification has been passed to the data application device;
in response to the hash value existing in the hash data, and the hash value is queried not for the first time, transmitting a response information indicating that the verification has been failed to the data application device; and
in response to the hash value not existing in the hash data, transmitting the response information indicating that the verification has been failed to the data application device.

11. The method of claim 8, wherein, the performing data preprocessing on respective pieces of the first data, thereby obtaining respective pieces of service data, comprises:
performing data cleansing on respective pieces of the first data, thereby obtaining second data corresponding to respective pieces of the first data; and
adding identification information to respective pieces of the second data, thereby obtaining the service data corresponding to respective pieces of the second data, so that respective pieces of the service data are different from each other.

12. The method of claim 8, wherein, after the receiving the data acquisition request transmitted by the computility processing device, wherein the data acquisition request carries the data range and the data information, the method comprises:
in response to the data range being illegal, rejecting the data acquisition request, and ending the operation process.

13. A computer device, comprising a memory and a processor, wherein computer-readable instructions are stored in the memory; and upon being executed by one or more processors, the computer readable instructions cause the one or more processors to perform the method of any one of claims 1 to 3, 4 to 7, and 8 to 12.

14. A computer-readable storage medium, the storage medium being readable and writable by a processor, wherein the storage medium stores computer-readable instructions; and upon being executed by one or more processors, the computer readable instructions cause the one or more processors to perform the method of any one of claims 1 to 3, 4 to 7, and 8 to 12.
